# EUROPEAN PATENT APPLICATION

(11) **EP 4 592 848 A1**
(43) Date of publication of application: **30.07.2025**
(21) Application number: 23878677.6
(22) Date of filing: 26.06.2023
(51) Int. Cl.: G06F 11/22

(54) **FAULT HANDLING METHOD AND APPARATUS**

(30) Priority: 20.10.2022 CN 202211285436
(71) Applicant: Huawei Technologies Co., Ltd., Shenzhen, Guangdong 518129 (CN)
(72) Inventor: LUO, Guangjun, Shenzhen, Guangdong 518129 (CN); WANG, Ming, Shenzhen, Guangdong 518129 (CN); KYI, Maung Aung, Shenzhen, Guangdong 518129 (CN); LIN, Zelong, Shenzhen, Guangdong 518129 (CN)
(74) Representative: Gill Jennings & Every LLP
(86) International application number: PCT/CN2023/102309
(87) International publication number: WO 2024/082680

(57) **Abstract**

Embodiments of this application relate to the field of chip technologies, and disclose a troubleshooting method and apparatus, to reliably report a hardware fault generated by a hardware unit of a chip. The method is applied to a chip, and the chip includes a hardware unit, a first processor, and a second processor. The method includes: The first processor receives a hardware fault reported by the hardware unit; and the second processor receives the hardware fault reported by the hardware unit.

## Description

This application claims priority to Chinese Patent Application No. 202211285436.0, filed with the China National Intellectual Property Administration on October 20, 2022 and entitled "TROUBLESHOOTING METHOD AND APPARATUS", which is incorporated herein by reference in its entirety.

### TECHNICAL FIELD

Embodiments of this application relate to the field of chip technologies, and in particular, to a troubleshooting method and apparatus.

### BACKGROUND

With development of science and technologies and application of an artificial intelligence technology, an autonomous driving technology is rapidly developed and widely applied. A vehicle-mounted chip (system on chip, SoC) is one of main hardware for implementing the autonomous driving technology. As an autonomous driving function becomes increasingly complex, hardware units integrated into the vehicle-mounted SoC also increase.

Various hardware faults may occur during running of the vehicle-mounted SoC. If a hardware fault occurs when a vehicle stops, the vehicle may fail to start. If a hardware fault occurs when a vehicle is travelling, a function of the vehicle may be damaged, and in an extreme case, a risk of vehicle collision may increase, causing personal and property damage.

Therefore, how to reliably report a hardware fault generated by a hardware unit of a chip is one of problems that need to be urgently resolved by a person skilled in the art.

### SUMMARY

Embodiments of this application provide a troubleshooting method and apparatus, to reliably report a hardware fault generated by a hardware unit of a chip. To achieve the foregoing objectives, the following technical solutions are used in embodiments of this application.

According to a first aspect, an embodiment of this application provides a troubleshooting method, applied to a chip, where the chip includes a hardware unit, a first processor, and a second processor, and the method includes: The first processor receives a hardware fault reported by the hardware unit; and the second processor receives the hardware fault reported by the hardware unit.

In a related technology, after a hardware fault occurs in a hardware unit in a chip, the hardware unit reports the hardware fault only to a functional security processor. A hardware fault reporting path is single and reliability is poor. However, in the troubleshooting method provided in this embodiment of this application, after the hardware fault occurs in the hardware unit in the chip, the hardware unit simultaneously reports the hardware fault to both the first processor (for example, a functional security processor) and the second processor (for example, an application processor) in a redundancy manner, to improve reliability of hardware fault reporting and ensure that no hardware fault is missing during troubleshooting.

In a possible implementation, the method further includes: The first processor sends the hardware fault to an off-chip processor.

It should be noted that the off-chip processor may process a severe hardware fault that cannot be processed by the functional security processor. Therefore, a hardware fault that cannot be processed by the second processor may be sent to the off-chip processor through the first processor for processing, to ensure that all hardware faults reported by the hardware unit in the chip can be processed.

In a possible implementation, the first processor sends the hardware fault to the off-chip processor when the first processor does not receive indication information sent by the second processor. The indication information represents that the second processor has received the hardware fault.

For example, after detecting the hardware fault in a hardware security mechanism, the hardware unit in the chip simultaneously reports the hardware fault to both the first processor and the second processor. After receiving the hardware fault, the first processor obtains specific information about the hardware fault, and waits, within time T, for the second processor to send a handshake signal (namely, the indication information) for the hardware fault. If the first processor receives, within the time T, the handshake signal that is of the fault and that is sent by the second processor, the first processor records detailed information about the fault, and does not perform subsequent processing. If the first processor does not receive, within the time T, the handshake signal that is of the fault and that is sent by the second processor, the first processor records detailed information about the fault, raises a severity level of the fault, and reports the fault to the off-chip processor, and the off-chip processor performs troubleshooting with a higher level.

If the handshake signal of the fault is not received within the time T, it indicates that an unpredictable fault may occur in the second processor. To meet a real-time requirement of a system application, the fault needs to be quickly reported to the off-chip processor for troubleshooting. If the handshake signal of the fault is received within the time T, it indicates that the second processor can process the fault. Therefore, the fault may not be reported to the off-chip processor, so that the same fault is not repeatedly processed.

It should be noted that a case in which the second processor receives the hardware fault reported by the hardware unit, but the first processor does not receive the indication information that is sent by the second processor and that represents that the second processor has received the hardware fault indicates that the unpredictable fault may occur in the second processor. To meet the real-time requirement of the system application, the fault needs to be quickly reported to the off-chip processor for troubleshooting, to ensure that all hardware faults reported by the hardware unit in the chip can be processed.

In a possible implementation, the chip may further include an error management unit.

In a possible implementation, the error management unit may receive the hardware fault reported by the hardware unit. The error management unit sends the hardware fault to the first processor and/or the off-chip processor.

In a related technology, after a hardware fault occurs in a hardware unit in a chip, the hardware unit reports the hardware fault only to a functional security processor. A hardware fault reporting path is single and reliability is poor. However, in the troubleshooting method provided in this embodiment of this application, after the hardware fault occurs in the hardware unit in the chip, the hardware unit simultaneously reports the hardware fault to both the error management unit and the second processor (for example, an application processor) in a redundancy manner, and then the error management unit reports the hardware fault to the first processor (for example, the application processor) and/or the off-chip processor. In this way, multipath redundancy reporting of the hardware fault is implemented, to improve reliability of hardware fault reporting and ensure that no hardware fault is missing during troubleshooting.

Optionally, the error management unit stores configuration information, and the configuration information indicates a receive end of the hardware fault.

In a possible implementation, the error management unit sends the hardware fault to the first processor when the configuration information indicates that the receive end of the hardware fault is the first processor; the error management unit sends the hardware fault to the off-chip processor when the configuration information indicates that the receive end of the hardware fault is the off-chip processor; or the error management unit sends the hardware fault to the first processor and the off-chip processor when the configuration information indicates that the receive end of the hardware fault comprises the first processor and the off-chip processor.

It should be noted that the off-chip processor may process a severe hardware fault that cannot be processed by the functional security processor. Therefore, a hardware fault that cannot be processed by the second processor may be sent to the off-chip processor through the error management unit for processing, to ensure that all hardware faults reported by the hardware unit in the chip can be processed.

In a possible implementation, the second processor may detect the hardware fault of the hardware unit. The second processor reports the hardware fault of the hardware unit to the first processor.

For example, the second processor may detect the hardware fault of the hardware unit by using a software method such as software test library (software test library, STL) or software diversity (software diversity), and then report the detected hardware fault to the first processor for processing.

It may be understood that, due to a technical implementation limitation, the hardware unit in the chip may be incapable of detecting all hardware faults in the hardware security mechanism. Therefore, based on an actual hardware circuit feature and the used software method, the second processor may additionally detect the hardware fault of the hardware unit in the chip, and then report the detected hardware fault to the first processor for processing.

In a possible implementation, the second processor may report the hardware fault of the hardware unit to the error management unit, and the error management unit sends the hardware fault to the first processor.

It can be learned that the second processor may use the software method to additionally detect the hardware fault of the hardware unit in the chip, and then report the detected hardware fault to the first processor through the error management unit for processing.

Optionally, the first processor is a functional security processor, and the second processor is an application processor.

According to a second aspect, an embodiment of this application provides another troubleshooting method, applied to a chip, where the chip includes a hardware unit and an error management unit, the error management unit includes a logic circuit and a plurality of registers, the plurality of registers are in one-to-one correspondence with a plurality of hardware faults, and the method includes: The logic circuit receives a hardware fault reported by the hardware unit. The logic circuit sends the hardware fault to a first register, where the first register is a register that corresponds to the hardware fault and that is in the plurality of registers. The first register sends the hardware fault to the off-chip processor through a direct-connection hardware channel, where the direct-connection hardware channel is a hardware channel between the error management unit and the off-chip processor.

In a related technology, after a processor in a chip (for example, a safety micro controller unit (micro controller unit, MCU) in the chip) receives a hardware fault reported by each hardware unit in the chip, the processor needs to first handle an interrupt, then parse fault information through software, and then send, via a bus (for example, a serial port) the hardware fault to an off-chip processor for processing. It can be seen that in the related troubleshooting method, multi-layer hardware and software processing need to be performed on the hardware fault, a processing path is long, and system response time is long. However, in the troubleshooting method provided in this embodiment of this application, after receiving the hardware fault reported by the hardware unit, the error management unit does not need to perform multi-layer hardware and software processing, and only needs to forward the fault to the corresponding register through the logic circuit, and then the register directly sends, through the hardware channel between the error management unit and the off-chip processor, the hardware fault to the off-chip processor for processing, to reduce a processing path length and shorten the system response time.

In a possible implementation, the method may further include: The logic circuit determines, based on a number of the hardware fault, the register corresponding to the hardware fault.

It may be understood that, because the plurality of registers are in one-to-one correspondence with the plurality of hardware faults, the logic circuit determines, based on the number (a fault source) of the hardware fault, the register corresponding to the hardware fault, and then forwards the fault to the corresponding register, and then the register directly sends, through the hardware channel between the error management unit and the off-chip processor, the hardware fault to the off-chip processor for processing, to reduce a processing path length and shorten system response time.

Optionally, the first register may store configuration information, and the configuration information indicates a receive end of the hardware fault.

The first register sends the hardware fault to the off-chip processor through the direct-connection hardware channel when the configuration information indicates that the receive end of the hardware fault is the off-chip processor.

It should be noted that, because the plurality of registers are in one-to-one correspondence with the plurality of hardware faults, a receive end corresponding to configuration information stored in a register corresponding to a severe hardware fault (namely, a hardware fault that cannot be processed by an internal processor of the chip or is relatively difficult for the internal processor to process) may be set as the off-chip processor, so that the severe hardware fault can be uploaded to the off-chip processor in a timely manner for processing.

Optionally, the chip may further include a first processor.

In a possible implementation, the method may further include: The first register sends the hardware fault to the first processor.

It may be understood that reporting the same hardware fault to the first processor and the off-chip processor may implement multipath redundancy reporting of the hardware fault, to improve reliability of hardware fault reporting and ensure that no hardware fault is missing during troubleshooting.

In a possible implementation, the first register sends the hardware fault to the first processor when the configuration information indicates that the receive end of the hardware fault is the first processor.

It should be noted that, because the plurality of registers are in one-to-one correspondence with the plurality of hardware faults, a receive end corresponding to configuration information stored in a register corresponding to a common hardware fault (namely a hardware fault that can be processed by the internal processor of the chip) may be set as the first processor, so that the common hardware fault can be processed by the internal processor of the chip, to relieve processing pressure of the off-chip processor.

Optionally, the chip may further include a second processor.

In a possible implementation, the method may further include: The first register sends the hardware fault to the second processor.

It may be understood that reporting the same hardware fault to the second processor and the off-chip processor may implement multipath redundancy reporting of the hardware fault, to improve reliability of hardware fault reporting and ensure that no hardware fault is missing during troubleshooting.

In a possible implementation, the method may further include: The first register sends the hardware fault to the first processor. The second processor receives the hardware fault reported by the hardware unit. The first processor sends the hardware fault to the off-chip processor.

In a possible implementation, the first processor may send the hardware fault to the off-chip processor when the first processor does not receive indication information sent by the second processor, where the indication information represents that the second processor has received the hardware fault.

For example, after detecting the hardware fault in a hardware security mechanism, the hardware unit in the chip simultaneously reports the hardware fault to both the first processor and the second processor. After receiving the hardware fault, the first processor obtains specific information about the hardware fault, and waits, within time T, for the second processor to send a handshake signal (namely, the indication information) for the hardware fault. If the first processor receives, within the time T, the handshake signal that is of the fault and that is sent by the second processor, the first processor records detailed information about the fault, and does not perform subsequent processing. If the first processor does not receive, within the time T, the handshake signal that is of the fault and that is sent by the second processor, the first processor records detailed information about the fault, raises a severity level of the fault, and reports the fault to the off-chip processor, and the off-chip processor performs troubleshooting with a higher level.

If the handshake signal of the fault is not received within the time T, it indicates that an unpredictable fault may occur in the second processor. To meet a real-time requirement of a system application, the fault needs to be quickly reported to the off-chip processor for troubleshooting. If the handshake signal of the fault is received within the time T, it indicates that the second processor can process the fault. Therefore, the fault may not be reported to the off-chip processor, so that the same fault is not repeatedly processed.

It should be noted that a case in which the second processor receives the hardware fault reported by the hardware unit, but the first processor does not receive the indication information that is sent by the second processor and that represents that the second processor has received the hardware fault indicates that the unpredictable fault may occur in the second processor. To meet the real-time requirement of the system application, the fault needs to be quickly reported to the off-chip processor for troubleshooting, to ensure that all hardware faults reported by the hardware unit in the chip can be processed.

In a possible implementation, the method may further include: The second processor detects the hardware fault of the hardware unit. The second processor reports the hardware fault of the hardware unit to the logic circuit.

For example, the second processor may detect the hardware fault of the hardware unit by using a software method such as STL or software diversity, and then report the detected hardware fault to the first processor for processing.

It may be understood that, due to a technical implementation limitation, the hardware unit in the chip may be incapable of detecting all hardware faults in the hardware security mechanism. Therefore, based on an actual hardware circuit feature and the used software method, the second processor may additionally detect the hardware fault of the hardware unit in the chip, and then report the detected hardware fault to the error management unit for processing.

According to a third aspect, an embodiment of this application provides a troubleshooting apparatus, used in a chip, where the chip includes a hardware unit, a first processor, and a second processor, and the apparatus includes a first control unit and a second control unit. The first control unit is configured to control the first processor to receive a hardware fault reported by the hardware unit, and control the second processor to receive the hardware fault reported by the hardware unit. The second control unit is configured to control the second processor to receive the hardware fault reported by the hardware unit.

In a possible implementation, the first control unit is further configured to control the first processor to send the hardware fault to an off-chip processor.

In a possible implementation, the first control unit is specifically configured to control the first processor to send the hardware fault to the off-chip processor when the first processor does not receive indication information sent by the second processor, where the indication information represents that the second processor has received the hardware fault.

In a possible implementation, the chip further includes an error management unit.

In a possible implementation, the first control unit is specifically configured to: control the error management unit to receive the hardware fault reported by the hardware unit; and control the error management unit to send the hardware fault to the first processor and/or the off-chip processor.

Optionally, the error management unit stores configuration information, and the configuration information indicates a receive end of the hardware fault.

In a possible implementation, the first control unit is specifically configured to: control the error management unit to send the hardware fault to the first processor when the configuration information indicates that the receive end of the hardware fault is the first processor; control the error management unit to send the hardware fault to the off-chip processor when the configuration information indicates that the receive end of the hardware fault is the off-chip processor; or control the error management unit to send the hardware fault to the first processor and the off-chip processor when the configuration information indicates that the receive end of the hardware fault comprises the first processor and the off-chip processor.

In a possible implementation, the second control unit is further configured to: control the second processor to detect the hardware fault of the hardware unit; and control the second processor to report the hardware fault of the hardware unit to the first processor.

In a possible implementation, the second control unit is specifically configured to: control the second processor to report the hardware fault of the hardware unit to the error management unit; and control the error management unit to send the hardware fault to the first processor.

Optionally, the first processor is a functional security processor, and the second processor is an application processor.

According to a fourth aspect, an embodiment of this application provides another troubleshooting apparatus, used in a chip, where the chip includes a hardware unit and an error management unit, the error management unit includes a logic circuit and a plurality of registers, the plurality of registers are in one-to-one correspondence with a plurality of hardware faults, and the apparatus includes a first control unit and a second control unit. The first control unit is configured to control the logic circuit to receive a hardware fault reported by the hardware unit, and control the logic circuit to send the hardware fault to a first register, where the first register is a register that corresponds to the hardware fault and that is in the plurality of registers. The second control unit is configured to control the first register to send the hardware fault to the off-chip processor through a direct-connection hardware channel, where the direct-connection hardware channel is a hardware channel between the error management unit and the off-chip processor.

In a possible implementation, the first control unit is further configured to control the logic circuit to determine, based on a number of the hardware fault, the register corresponding to the hardware fault.

In a possible implementation, the first register stores configuration information, and the configuration information indicates a receive end of the hardware fault.

In a possible implementation, the second control unit is specifically configured to control the first register to send the hardware fault to the off-chip processor through the direct-connection hardware channel when the configuration information indicates that the receive end of the hardware fault is the off-chip processor.

In a possible implementation, the chip further includes a first processor.

In a possible implementation, the second control unit is further configured to control the first register to send the hardware fault to the first processor.

In a possible implementation, the second control unit is specifically configured to control the first register to send the hardware fault to the first processor when the configuration information indicates that the receive end of the hardware fault is the first processor.

In a possible implementation, the chip further includes a second processor.

In a possible implementation, the second control unit is further configured to control the second processor to receive the hardware fault reported by the hardware unit.

In a possible implementation, the second control unit is further configured to control the first register to send the hardware fault to the first processor; control the second processor to receive the hardware fault reported by the hardware unit; and control the first processor to send the hardware fault to the off-chip processor.

In a possible implementation, the second control unit is specifically configured to control the first processor to send the hardware fault to the off-chip processor when the first processor does not receive indication information sent by the second processor, where the indication information represents that the second processor has received the hardware fault.

In a possible implementation, the second control unit is further configured to: control the second processor to detect the hardware fault of the hardware unit; and control the second processor to report the hardware fault of the hardware unit to the logic circuit.

According to a fifth aspect, an embodiment of this application further provides a troubleshooting apparatus. The troubleshooting apparatus includes at least one processor. When the at least one processor executes program code or instructions, the method in any one of the first aspect or the possible implementations of the first aspect is implemented.

Optionally, the troubleshooting apparatus may further include at least one memory, and the at least one memory is configured to store the program code or the instructions.

According to a sixth aspect, an embodiment of this application further provides a chip, including an input interface, an output interface, and at least one processor. Optionally, the chip further includes a memory. The at least one processor is configured to execute code in the memory. When the at least one processor executes the code, the chip implements the method in any one of the first aspect or the possible implementations of the first aspect.

Optionally, the chip may be an integrated circuit.

According to a seventh aspect, an embodiment of this application further provides a computer-readable storage medium, configured to store a computer program. The computer program is for implementing the method in any one of the first aspect or the possible implementations of the first aspect.

According to an eighth aspect, an embodiment of this application further provides a computer program product including instructions. When the instructions are run on a computer, the computer implements the method in any one of the first aspect or the possible implementations of the first aspect.

The troubleshooting apparatus, the computer storage medium, the computer program product, and the chip provided in this embodiment are all configured to perform the method provided above. Therefore, for beneficial effects that can be achieved by the troubleshooting apparatus, the computer storage medium, the computer program product, and the chip, refer to the beneficial effects in the method provided above. Details are not described herein again.

### BRIEF DESCRIPTION OF DRAWINGS

To describe technical solutions in embodiments of this application more clearly, the following briefly describes accompanying drawings for describing embodiments. It is clear that the accompanying drawings in the following descriptions show merely some of embodiments of this application, and a person of ordinary skill in the art may still derive other accompanying drawings from these accompanying drawings without creative efforts.
FIG. 1 is a diagram of a structure of a chip according to an embodiment of this application;
FIG. 2 is a diagram of a structure of another chip according to an embodiment of this application;
FIG. 3 is a diagram of a structure of still another chip according to an embodiment of this application;
FIG. 4 is a diagram of a structure of still another chip according to an embodiment of this application;
FIG. 5 is a schematic flowchart of a troubleshooting method according to an embodiment of this application;
FIG. 6 is a diagram of a hardware fault reporting path according to an embodiment of this application;
FIG. 7 is a schematic flowchart of another troubleshooting method according to an embodiment of this application;
FIG. 8 is a diagram of another hardware fault reporting path according to an embodiment of this application;
FIG. 9 is a diagram of a structure of a troubleshooting apparatus according to an embodiment of this application; and
FIG. 10 is a diagram of a structure of another troubleshooting apparatus according to an embodiment of this application.

### DESCRIPTION OF EMBODIMENTS

The following clearly and completely describes technical solutions of embodiments of this application with reference to accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of embodiments of this application.

The term "and/or" in this specification describes only an association relationship for describing associated objects and represents that three relationships may exist. For example, A and/or B may represent the following three cases: Only A exists, both A and B exist, and only B exists.

In this specification and the accompanying drawings of embodiments of this application, the terms "first", "second", and the like are intended to distinguish between different objects or distinguish between different processing of a same object, but do not indicate a particular order of the objects.

In addition, the terms "including", "having", and any other variants thereof mentioned in descriptions of embodiments of this application are intended to cover a non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device.

It should be noted that, in descriptions of embodiments of this application, the term "example", "for example", or the like represents giving an example, an illustration, or a description. Any embodiment or design scheme described as an "example" or "for example" in embodiments of this application should not be explained as being more preferred or having more advantages than another embodiment or design scheme. Exactly, use of the term such as "example" or "for example" is intended to present a related concept in a specific manner.

In descriptions of embodiment of this application, unless otherwise stated, "a plurality of" means two or more.

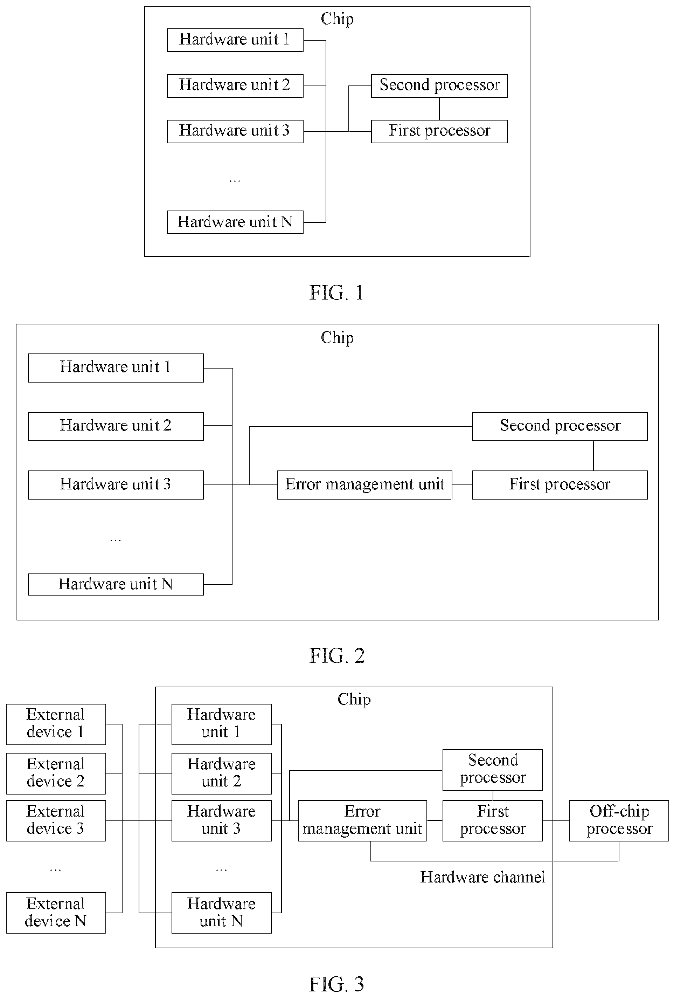

Embodiments of this application provide a troubleshooting method, to reliably report a hardware fault generated by a hardware unit of a chip. The method may be applied to a chip. FIG. 1 shows a possible existence form of the chip.

As shown in FIG. 1, the chip may include a plurality of hardware units, a first processor, and a second processor.

The hardware unit is configured to: implement various hardware functions and detect a hardware fault in a hardware mechanism.

The plurality of hardware units may include hardware units such as a general computing core (General Computing Core), a hardware accelerator, a deep learning accelerator, an on-chip accelerator, and a memory.

The plurality of hardware units may be connected to each other. For example, the plurality of hardware units may be connected via a bus or an interconnection unit.

The general computing core is configured to implement parallel acceleration computing of an algorithm in the chip.

The general computing core may include a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like.

The hardware accelerator is configured to preprocess an image input to the chip. For example, the hardware accelerator may be an image signal processor.

The deep learning accelerator is configured to implement a matrix multiplication and addition operation in the chip. For example, the deep learning accelerator may be a neural-network processing unit.

The on-chip accelerator is configured to process a data signal input to the chip. For example, the on-chip accelerator may be a data signal processor.

The memory is configured to store an input, an intermediate result, and an output of an algorithm.

The first processor may be a safety micro controller unit (safety MCU).

The second processor may be an application processor (application processor, AP).

As shown in FIG. 2, the chip may further include an error management unit.

The error management unit includes a logic circuit and a plurality of registers.

As shown in FIG. 3, the error management unit and the first processor in the chip may be connected to an off-chip processor outside the chip. There is a hardware channel between the error management unit and the off-chip processor. The hardware unit in the chip may be connected to an external device.

The off-chip processor may also be referred to as an off-chip controller, and the off-chip processor may be a CPU, an MCU, or a single-chip microcomputer.

The off-chip processor may handle a hardware fault and input a vehicle's steering function, acceleration function, braking function, and control signal to a vehicle chassis.

The external device may include an external device such as a vehicle-mounted camera, a millimeter-wave radar, and a lidar.

The vehicle-mounted camera is configured to collect image data in front of and surrounding the vehicle, and is used for subsequent data input for identifying a road structure, an obstacle, a traffic sign, and the like.

The millimeter-wave radar is configured to collect a location, a movement speed, and direction data of a moving object in front of and surrounding of the vehicle.

The lidar is configured to collect data such as an ambient environment of the vehicle, and an obstacle location, movement speed, direction, and contour.

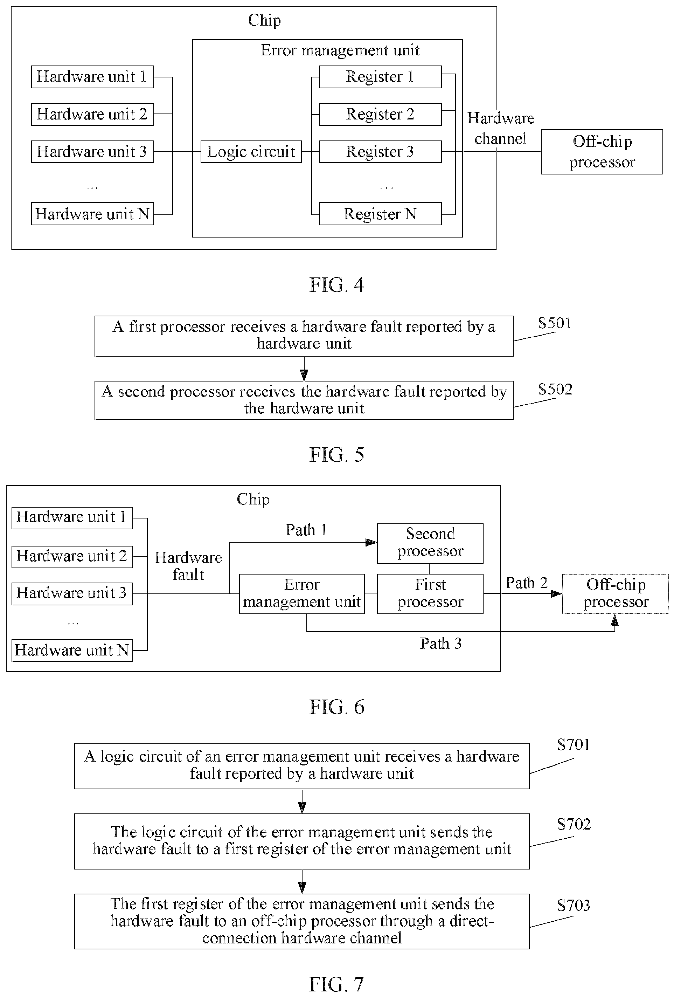

FIG. 4 shows a possible existence form of the chip.

As shown in FIG. 4, the chip may include a plurality of hardware units and an error management unit. There is a hardware channel between the error management unit and an off-chip processor outside the chip.

The error management unit includes a logic circuit and a plurality of registers.

The logic circuit of the error management unit may determine, based on a number (a fault source) of a hardware fault, a register corresponding to the hardware fault, and then send the hardware fault to the register corresponding to the hardware fault.

The register of the error management unit may send the received hardware fault to a corresponding receive end.

The register of the error management unit stores configuration information, and the configuration information indicates the receive end of the hardware fault.

A user may edit the configuration information to make the register of the error management unit to send the received hardware fault to a user's expected receive end.

FIG. 5 shows a troubleshooting method according to an embodiment of this application. As shown in FIG. 5, the method includes the following steps.

S501: A first processor receives a hardware fault reported by a hardware unit.

For example, after detecting the hardware fault in a hardware security mechanism in a running process, the hardware unit may report the hardware fault to the first processor. Correspondingly, the first processor receives the hardware fault reported by the hardware unit.

In a possible implementation, the error management unit may receive the hardware fault reported by the hardware unit. The error management unit sends the hardware fault to the first processor and/or an off-chip processor.

In a related technology, after a hardware fault occurs in a hardware unit in a chip, the hardware unit reports the hardware fault only to a functional security processor. A hardware fault reporting path is single and reliability is poor. However, in the troubleshooting method provided in this embodiment of this application, after the hardware fault occurs in the hardware unit in the chip, the hardware unit simultaneously reports the hardware fault to both the error management unit and a second processor (for example, an application processor) in a redundancy manner, and then the error management unit reports the hardware fault to the first processor (for example, an application processor). In this way, multipath redundancy reporting of the hardware fault is implemented, to improve reliability of hardware fault reporting and ensure that no hardware fault is missing during troubleshooting.

Optionally, the error management unit stores configuration information, and the configuration information indicates a receive end of the hardware fault.

In a possible implementation, the error management unit sends the hardware fault to the first processor when the configuration information indicates that the receive end of the hardware fault is the first processor; the error management unit sends the hardware fault to the off-chip processor when the configuration information indicates that the receive end of the hardware fault is the off-chip processor; or the error management unit sends the hardware fault to the first processor and the off-chip processor when the configuration information indicates that the receive end of the hardware fault comprises the first processor and the off-chip processor.

It should be noted that the off-chip processor may process a severe hardware fault that cannot be processed by the functional security processor. Therefore, a hardware fault that cannot be processed by the second processor may be sent to the off-chip processor through the error management unit for processing, to ensure that all hardware faults reported by the hardware unit in the chip can be processed.

S502: The second processor receives the hardware fault reported by the hardware unit.

For example, after detecting the hardware fault in the hardware security mechanism in the running process, the hardware unit may report the hardware fault to the second processor. Correspondingly, the second processor receives the hardware fault reported by the hardware unit.

In a related technology, after a hardware fault occurs in a hardware unit in a chip, the hardware unit reports the hardware fault only to a functional security processor. A hardware fault reporting path is single and reliability is poor. However, in the troubleshooting method provided in this embodiment of this application, after the hardware fault occurs in the hardware unit in the chip, the hardware unit simultaneously reports the hardware fault to both the first processor (for example, a functional security processor) and the second processor (for example, an application processor) in a redundancy manner, to improve reliability of hardware fault reporting and ensure that no hardware fault is missing during troubleshooting.

Optionally, the method may further include the following steps.

S503: The first processor sends the hardware fault to the off-chip processor.

It should be noted that the off-chip processor may process a severe hardware fault that cannot be processed by the functional security processor. Therefore, a hardware fault that cannot be processed by the second processor may be sent to the off-chip processor through the first processor for processing, to ensure that all hardware faults reported by the hardware unit in the chip can be processed.

In a possible implementation, the first processor sends the hardware fault to the off-chip processor when the first processor does not receive indication information sent by the second processor. The indication information represents that the second processor has received the hardware fault.

For example, after detecting the hardware fault in a hardware security mechanism, the hardware unit in the chip simultaneously reports the hardware fault to both the first processor and the second processor. After receiving the hardware fault, the first processor obtains specific information about the hardware fault, and waits, within time T, for the second processor to send a handshake signal (namely, the indication information) for the hardware fault. If the first processor receives, within the time T, the handshake signal that is of the fault and that is sent by the second processor, the first processor records detailed information about the fault, and does not perform subsequent processing. If the first processor does not receive, within the time T, the handshake signal that is of the fault and that is sent by the second processor, the first processor records detailed information about the fault, raises a severity level of the fault, and reports the fault to the off-chip processor, and the off-chip processor performs troubleshooting with a higher level.

If the handshake signal of the fault is not received within the time T, it indicates that an unpredictable fault may occur in the second processor. To meet a real-time requirement of a system application, the fault needs to be quickly reported to the off-chip processor for troubleshooting. If the handshake signal of the fault is received within the time T, it indicates that the second processor can process the fault. Therefore, the fault may not be reported to the off-chip processor, so that the same fault is not repeatedly processed.

It should be noted that, a case in which the second processor receives the hardware fault reported by the hardware unit, but the first processor does not receive the indication information that is sent by the second processor and that represents that the second processor has received the hardware fault indicates that the unpredictable fault may occur in the second processor. To meet the real-time requirement of the system application, the fault needs to be quickly reported to the off-chip processor for troubleshooting, to ensure that all the hardware faults reported by the hardware unit in the chip can be processed.

S504: The error management unit sends the hardware fault to the off-chip processor.

It should be noted that the off-chip processor may process a severe hardware fault that cannot be processed by the functional security processor. Therefore, a hardware fault that cannot be processed by the second processor may be sent to the off-chip processor through the error management unit for processing, to ensure that all hardware faults reported by the hardware unit in the chip can be processed.

As shown in FIG. 6, it can be learned from FIG. 6 that there are three hardware fault reporting paths in the method provided in this embodiment of this application: a path 1 (from the hardware units to the second processor), a path 2 (from the hardware units to the error management unit, from the error management unit to the first processor, and from the first processor to the off-chip processor), and a path 3 (from the hardware units to the error management unit, and from the error management unit to the off-chip processor). In this way, multipath redundancy reporting of the hardware fault in the chip is implemented, to improve reliability of hardware fault reporting and ensure that no hardware fault is missing during troubleshooting.

S505: The second processor may detect the hardware fault of the hardware unit, and report the hardware fault of the hardware unit to the first processor.

For example, the second processor may detect the hardware fault of the hardware unit by using a software method such as STL or software diversity, and then report the detected hardware fault to the first processor for processing.

It may be understood that, due to a technical implementation limitation, the hardware unit in the chip may be incapable of detecting all hardware faults in the hardware security mechanism. Therefore, based on an actual hardware circuit feature and the used software method, the second processor may additionally detect the hardware fault of the hardware unit in the chip, and then report the detected hardware fault to the first processor for processing.

In a possible implementation, the second processor may report the hardware fault of the hardware unit to the error management unit, and the error management unit sends the hardware fault to the first processor.

It can be learned that the second processor may use the software method to additionally detect the hardware fault of the hardware unit in the chip, and then report the detected hardware fault to the first processor through the error management unit for processing.

The following describes, with reference to the foregoing chip, another troubleshooting method provided in an embodiment of this application.

FIG. 7 shows another troubleshooting method according to an embodiment of this application. As shown in FIG. 7, the method includes the following steps.

S701: A logic circuit of an error management unit receives a hardware fault reported by a hardware unit.

For example, after detecting the hardware fault in a hardware security mechanism in a running process, the hardware unit may report the hardware fault to the logic circuit of the error management unit. Correspondingly, the logic circuit of the error management unit receives the hardware fault reported by the hardware unit.

S702: The logic circuit of the error management unit sends the hardware fault to a first register of the error management unit.

The first register is a register that corresponds to the hardware fault and that is in a plurality of registers of the error management unit.

The plurality of registers are in one-to-one correspondence with a plurality of hardware faults. For example, mapping relationships between the plurality of registers and (numbers or fault sources of) the plurality of hardware faults may be established, so that the plurality of registers are in one-to-one correspondence with the plurality of hardware faults

For example, the logic circuit may first determine, based on a number of the hardware fault, the register corresponding to the hardware fault, and then send the hardware fault to the register corresponding to the hardware fault.

It may be understood that, because the plurality of registers are in one-to-one correspondence with the plurality of hardware faults, the logic circuit determines, based on the number (a fault source) of the hardware fault, the register corresponding to the hardware fault, and then forwards the fault to the corresponding register, and then the register directly sends, through a hardware channel between the error management unit and an off-chip processor, the hardware fault to the off-chip processor for processing, to reduce a processing path length and shorten system response time.

S703: The first register of the error management unit sends the hardware fault to the off-chip processor through a direct-connection hardware channel.

The direct-connection hardware channel is the hardware channel between the error management unit and the off-chip processor.

For example, the first register of the error management unit sends, to the off-chip processor through the direct-connection hardware channel, a general-purpose input/output (General-Purpose Input/Output, GPIO) signal or a differential signal that carries the hardware fault.

In a related technology, after a processor in a chip (for example, a safety micro controller unit (micro controller unit, MCU) in the chip) receives a hardware fault reported by each hardware unit in the chip, the processor needs to first handle an interrupt, then parse fault information through software, and then send, via a bus (for example, a serial port), the hardware fault to an off-chip processor for processing. It can be seen that in the related troubleshooting method, multi-layer hardware and software processing need to be performed on the hardware fault, a processing path is long, and system response time is long.

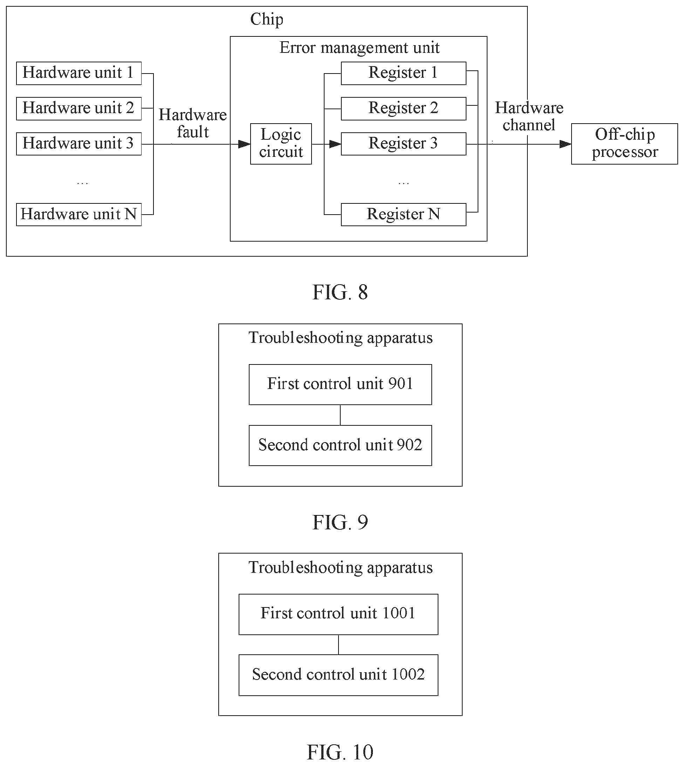

As shown in FIG. 8, in the troubleshooting method provided in this embodiment of this application, after receiving the hardware fault reported by the hardware unit, the error management unit does not need to perform multi-layer hardware and software processing, and only needs to forward the fault to the corresponding register through the logic circuit, and then the register directly sends, through the hardware channel between the error management unit and the off-chip processor, the hardware fault to the off-chip processor for processing, to reduce a processing path length and shorten the system response time.

In a possible implementation, the first register stores configuration information, and the configuration information indicates a receive end of the hardware fault.

In a possible implementation, the first register sends the hardware fault to the off-chip processor through the direct-connection hardware channel when the configuration information indicates that the receive end of the hardware fault is the off-chip processor.

It should be noted that, because the plurality of registers are in one-to-one correspondence with the plurality of hardware faults, a receive end corresponding to configuration information stored in a register corresponding to a severe hardware fault (namely, a hardware fault that cannot be processed by an internal processor of the chip or is relatively difficult for the internal processor to process) may be set as the off-chip processor, so that the severe hardware fault can be uploaded to the off-chip processor in a timely manner for processing.

Optionally, the method may further include the following steps.

S704: The first register sends the hardware fault to the first processor.

It may be understood that reporting the same hardware fault to the first processor and the off-chip processor may implement multipath redundancy reporting of the hardware fault, to improve reliability of hardware fault reporting and ensure that no hardware fault is missing during troubleshooting.

In a possible implementation, the first register sends the hardware fault to the first processor when the configuration information indicates that the receive end of the hardware fault is the first processor.

It should be noted that, because the plurality of registers are in one-to-one correspondence with the plurality of hardware faults, a receive end corresponding to configuration information stored in a register corresponding to a common hardware fault (namely, a hardware fault that can be processed by the internal processor of the chip) may be set as the first processor, so that the common hardware fault can be processed by the internal processor of the chip, to relieve processing pressure of the off-chip processor.

S705: The second processor receives the hardware fault reported by the hardware unit.

It may be understood that reporting the same hardware fault to the second processor and the off-chip processor may implement multipath redundancy reporting of the hardware fault, to improve reliability of hardware fault reporting and ensure that no hardware fault is missing during troubleshooting.

S706: The first register sends the hardware fault to the first processor.

S707: The first processor sends the hardware fault to the off-chip processor.

In a possible implementation, the first processor sends the hardware fault to the off-chip processor when the first processor does not receive indication information sent by the second processor, where the indication information represents that the second processor has received the hardware fault.

For example, after detecting the hardware fault in a hardware security mechanism, the hardware unit in the chip simultaneously reports the hardware fault to both the first processor and the second processor. After receiving the hardware fault, the first processor obtains specific information about the hardware fault, and waits, within time T, for the second processor to send a handshake signal (namely, the indication information) for the hardware fault. If the first processor receives, within the time T, the handshake signal that is of the fault and that is sent by the second processor, the first processor records detailed information about the fault, and does not perform subsequent processing. If the first processor does not receive, within the time T, the handshake signal that is of the fault and that is sent by the second processor, the first processor records detailed information about the fault, raises a severity level of the fault, and reports the fault to the off-chip processor, and the off-chip processor performs troubleshooting with a higher level.

If the handshake signal of the fault is not received within the time T, it indicates that an unpredictable fault may occur in the second processor. To meet a real-time requirement of a system application, the fault needs to be quickly reported to the off-chip processor for troubleshooting. If the handshake signal of the fault is received within the time T, it indicates that the second processor can process the fault. Therefore, the fault may not be reported to the off-chip processor, so that the same fault is not repeatedly processed.

It should be noted that, a case in which the second processor receives the hardware fault reported by the hardware unit, but the first processor does not receive the indication information that is sent by the second processor and that represents that the second processor has received the hardware fault indicates that the unpredictable fault may occur in the second processor. To meet the real-time requirement of the system application, the fault needs to be quickly reported to the off-chip processor for troubleshooting, to ensure that all hardware faults reported by the hardware unit in the chip can be processed.

S708: The second processor detects the hardware fault of the hardware unit, and reports the hardware fault of the hardware unit to the logic circuit.

For example, the second processor may detect the hardware fault of the hardware unit by using a software method such as STL or software diversity, and then report the detected hardware fault to the first processor for processing.

It may be understood that, due to a technical implementation limitation, the hardware unit in the chip may be incapable of detecting all hardware faults in the hardware security mechanism. Therefore, based on an actual hardware circuit feature and the used software method, the second processor may additionally detect the hardware fault of the hardware unit in the chip, and then report the detected hardware fault to the error management unit for processing.

The following describes, with reference to FIG. 9, a troubleshooting apparatus configured to perform the troubleshooting method.

It may be understood that, to implement the foregoing functions, the troubleshooting apparatus includes a corresponding hardware and/or software module for performing the functions. With reference to algorithm steps of each example described in embodiments disclosed in this specification, embodiments of this application can be implemented in the form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation exceeds the scope of embodiments of this application.

In embodiments of this application, the troubleshooting apparatus may be divided into functional modules based on the foregoing method examples. For example, each functional module may be obtained through division based on a corresponding function, or two or more functions may be integrated into one processing module. The integrated module may be implemented in the form of hardware. It should be noted that module division in this embodiment is an example and is merely logical function division. In actual implementation, there may be another division manner.

When each functional module corresponding to each function is obtained through division, FIG. 9 is a possible composition diagram of the troubleshooting apparatus in the foregoing embodiment. The troubleshooting apparatus is used in a chip, and the chip includes a hardware unit, a first processor, and a second processor.

Specifically, the troubleshooting apparatus may be the chip or a functional module in the chip.

As shown in FIG. 9, the troubleshooting apparatus includes a first control unit 901 and a second control unit 902.

The first control unit 901 is configured to control the first processor to receive a hardware fault reported by the hardware unit, and control the second processor to receive the hardware fault reported by the hardware unit.

The second control unit 902 is configured to control the second processor to receive the hardware fault reported by the hardware unit.

In a possible implementation, the first control unit 901 is further configured to control the first processor to send the hardware fault to an off-chip processor.

In a possible implementation, the first control unit 901 is specifically configured to control the first processor to send the hardware fault to the off-chip processor when the first processor does not receive indication information sent by the second processor, where the indication information represents that the second processor has received the hardware fault.

In a possible implementation, the chip further includes an error management unit.

In a possible implementation, the first control unit 901 is specifically configured to: control the error management unit to receive the hardware fault reported by the hardware unit; and control the error management unit to send the hardware fault to the first processor and/or the off-chip processor.

Optionally, the error management unit stores configuration information, and the configuration information indicates a receive end of the hardware fault.

In a possible implementation, the first control unit 901 is specifically configured to: control the error management unit to send the hardware fault to the first processor when the configuration information indicates that the receive end of the hardware fault is the first processor; control the error management unit to send the hardware fault to the off-chip processor when the configuration information indicates that the receive end of the hardware fault is the off-chip processor; or control the error management unit to send the hardware fault to the first processor and the off-chip processor when the configuration information indicates that the receive end of the hardware fault comprises the first processor and the off-chip processor.

In a possible implementation, the second control unit 902 is further configured to: control the second processor to detect the hardware fault of the hardware unit; and control the second processor to report the hardware fault of the hardware unit to the first processor.

In a possible implementation, the second control unit 902 is specifically configured to: control the second processor to report the hardware fault of the hardware unit to the error management unit; and control the error management unit to send the hardware fault to the first processor.

When each functional module corresponding to each function is obtained through division, FIG. 10 is another possible composition diagram of the troubleshooting apparatus in the foregoing embodiment. The troubleshooting apparatus is used in a chip, and the chip includes a hardware unit and an error management unit. The error management unit includes a logic circuit and a plurality of registers, and the plurality of registers are in one-to-one correspondence with a plurality of hardware faults.

Specifically, the troubleshooting apparatus may be the chip or a functional module in the chip.

As shown in FIG. 10, the troubleshooting apparatus includes a first control unit 1001 and a second control unit 1002.

The first control unit 1001 is configured to control the logic circuit to receive a hardware fault reported by the hardware unit, and control the logic circuit to send the hardware fault to a first register, where the first register is a register that corresponds to the hardware fault and that is in the plurality of registers.

The second control unit 1002 is configured to control the first register to send the hardware fault to the off-chip processor through a direct-connection hardware channel, where the direct-connection hardware channel is a hardware channel between the error management unit and the off-chip processor.

In a possible implementation, the first control unit 1001 is further configured to control the logic circuit to determine, based on a number of the hardware fault, the register corresponding to the hardware fault.

In a possible implementation, the first register stores configuration information, and the configuration information indicates a receive end of the hardware fault.

In a possible implementation, the second control unit 1002 is specifically configured to control the first register to send the hardware fault to the off-chip processor through the direct-connection hardware channel when the configuration information indicates that the receive end of the hardware fault is the off-chip processor.

In a possible implementation, the chip further includes a first processor.

In a possible implementation, the second control unit 1002 is further configured to control the first register to send the hardware fault to the first processor.

In a possible implementation, the second control unit 1002 is specifically configured to control the first register to send the hardware fault to the first processor when the configuration information indicates that the receive end of the hardware fault is the first processor.

In a possible implementation, the chip further includes a second processor.

In a possible implementation, the second control unit 1002 is further configured to control the second processor to receive the hardware fault reported by the hardware unit.

In a possible implementation, the second control unit 1002 is further configured to: control the first register to send the hardware fault to the first processor; control the second processor to receive the hardware fault reported by the hardware unit; and control the first processor to send the hardware fault to the off-chip processor.

In a possible implementation, the second control unit 1002 is specifically configured to control the first processor to send the hardware fault to the off-chip processor when the first processor does not receive indication information sent by the second processor, where the indication information represents that the second processor has received the hardware fault.

In a possible implementation, the second control unit 1002 is further configured to: control the second processor to detect the hardware fault of the hardware unit; and control the second processor to report the hardware fault of the hardware unit to the logic circuit.

An embodiment of this application further provides a troubleshooting apparatus. The apparatus includes at least one processor. When the at least one processor executes program code or instructions, the foregoing related method steps are implemented to implement the troubleshooting method in the foregoing embodiments.

Optionally, the apparatus may further include at least one memory, and the at least one memory is configured to store the program code or the instructions.

An embodiment of this application further provides a computer storage medium. The computer storage medium stores computer instructions. When the computer instructions are run on the troubleshooting apparatus, the troubleshooting apparatus is enabled to perform the foregoing related method steps, to implement the troubleshooting method in the foregoing embodiments.

An embodiment of this application further provides a computer program product. When the computer program product is run on a computer, the computer is enabled to perform the foregoing related steps to implement the troubleshooting method in the foregoing embodiments.

An embodiment of this application further provides a troubleshooting apparatus. The apparatus may be specifically a chip, an integrated circuit, a component, or a module. Specifically, the apparatus may include a connected processor and a memory configured to store instructions, or the apparatus includes at least one processor, configured to obtain instructions from an external memory. When the apparatus runs, the processor may execute the instructions, so that the chip performs the troubleshooting method in the foregoing method embodiments.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may understand that units and algorithm steps in the examples described with reference to embodiments disclosed in this specification can be implemented by electronic hardware, or a combination of computer software and electronic hardware. Whether the functions are performed by hardware or software depends on particular applications and design constraints of the technical solutions. A skilled person may use different methods to implement the described functions for each particular application, but it should not be considered that the implementation exceeds the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the plurality of embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The foregoing units described as separate parts may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of software functional unit and sold or used as an independent product, the functions may be stored in a computer-readable storage medium. Based on such an understanding, the technical solutions of this application essentially, or the part contributing to the conventional technologies, or some of the technical solutions may be implemented in the form of a software product. The computer software product is stored in a storage medium, and includes a plurality of instructions for indicating a computer device (which may be a personal computer, a server, or a network device) to perform all or a part of the steps of the method in embodiments of this application. The storage medium includes: any medium that can store program code, such as a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A troubleshooting method, applied to a chip, wherein the chip comprises a hardware unit, a first processor, and a second processor, and the method comprises:
receiving, by the first processor, a hardware fault reported by the hardware unit; and
receiving, by the second processor, the hardware fault reported by the hardware unit.

2. The method according to claim 1, wherein the method further comprises:
sending, by the first processor, the hardware fault to an off-chip processor.

3. The method according to claim 2, wherein the sending, by the first processor, the hardware fault to an off-chip processor comprises:
sending, by the first processor, the hardware fault to the off-chip processor when the first processor does not receive indication information sent by the second processor, wherein the indication information represents that the second processor has received the hardware fault.

4. The method according to any one of claims 1 to 3, wherein the chip further comprises an error management unit, and the receiving, by the first processor, a hardware fault reported by the hardware unit comprises:
receiving, by the error management unit, the hardware fault reported by the hardware unit; and
sending, by the error management unit, the hardware fault to the first processor and/or the off-chip processor.

5. The method according to claim 4, wherein the error management unit stores configuration information, the configuration information indicates a receive end of the hardware fault, and the sending, by the error management unit, the hardware fault to the first processor and/or the off-chip processor comprises:
sending, by the error management unit, the hardware fault to the first processor when the configuration information indicates that the receive end of the hardware fault is the first processor;
sending, by the error management unit, the hardware fault to the off-chip processor when the configuration information indicates that the receive end of the hardware fault is the off-chip processor; or
sending, by the error management unit, the hardware fault to the first processor and the off-chip processor when the configuration information indicates that the receive end of the hardware fault comprises the first processor and the off-chip processor.

6. The method according to any one of claims 1 to 5, wherein the method further comprises:
detecting, by the second processor, the hardware fault of the hardware unit; and
reporting, by the second processor, the hardware fault of the hardware unit to the first processor.

7. The method according to claim 6, wherein the chip further comprises the error management unit, and the reporting, by the second processor, the hardware fault of the hardware unit to the first processor comprises:
reporting, by the second processor, the hardware fault of the hardware unit to the error management unit; and
sending, by the error management unit, the hardware fault to the first processor.

8. The method according to any one of claims 1 to 7, wherein the first processor is a functional security processor, and the second processor is an application processor.

9. A troubleshooting method, applied to a chip, wherein the chip comprises a hardware unit and an error management unit, the error management unit comprises a logic circuit and a plurality of registers, the plurality of registers are in one-to-one correspondence with a plurality of hardware faults, and the method comprises:
receiving, by the logic circuit, a hardware fault reported by the hardware unit;
sending, by the logic circuit, the hardware fault to a first register, wherein the first register is a register that corresponds to the hardware fault and that is in the plurality of registers; and
sending, by the first register, the hardware fault to an off-chip processor through a direct-connection hardware channel, wherein the direct-connection hardware channel is a hardware channel between the error management unit and the off-chip processor.

10. The method according to claim 9, wherein the method further comprises:
determining, by the logic circuit based on a number of the hardware fault, the register corresponding to the hardware fault.

11. The method according to claim 9 or 10, wherein the first register stores configuration information, the configuration information indicates a receive end of the hardware fault, and the sending, by the first register, the hardware fault to an off-chip processor through a direct-connection hardware channel comprises:
sending, by the first register, the hardware fault to the off-chip processor through the direct-connection hardware channel when the configuration information indicates that the receive end of the hardware fault is the off-chip processor.

12. The method according to any one of claims 9 to 11, wherein the chip further comprises a first processor, and the method further comprises:
sending, by the first register, the hardware fault to the first processor.

13. The method according to claim 12, wherein the first register stores the configuration information, the configuration information indicates the receive end of the hardware fault, and the sending, by the first register, the hardware fault to the first processor comprises:
sending, by the first register, the hardware fault to the first processor when the configuration information indicates that the receive end of the hardware fault is the first processor.

14. The method according to any one of claims 9 to 13, wherein the chip further comprises a second processor, and the method further comprises:
receiving, by the second processor, the hardware fault reported by the hardware unit.

15. The method according to any one of claims 9 to 11, wherein the chip further comprises a first processor and a second processor, and the method further comprises:
sending, by the first register, the hardware fault to the first processor;
receiving, by the second processor, the hardware fault reported by the hardware unit; and
sending, by the first processor, the hardware fault to the off-chip processor.

16. The method according to claim 15, wherein the sending, by the first processor, the hardware fault to the off-chip processor comprises:
sending, by the first processor, the hardware fault to the off-chip processor when the first processor does not receive indication information sent by the second processor, wherein the indication information represents that the second processor has received the hardware fault.

17. The method according to any one of claims 9 to 16, wherein the chip further comprises the second processor, and the method further comprises:
detecting, by the second processor, the hardware fault of the hardware unit; and
reporting, by the second processor, the hardware fault of the hardware unit to the logic circuit.

18. A troubleshooting apparatus, used in a chip, wherein the chip comprises a hardware unit, a first processor, and a second processor, and the apparatus comprises a first control unit and a second control unit;
the first control unit is configured to control the first processor to receive a hardware fault reported by the hardware unit, and control the second processor to receive the hardware fault reported by the hardware unit; and
the second control unit is configured to control the second processor to receive the hardware fault reported by the hardware unit.

19. The apparatus according to claim 18, wherein the first control unit is further configured to:
control the first processor to send the hardware fault to an off-chip processor.

20. The apparatus according to claim 19, wherein the first control unit is specifically configured to:
control the first processor to send the hardware fault to the off-chip processor when the first processor does not receive indication information sent by the second processor, wherein the indication information represents that the second processor has received the hardware fault.

21. The apparatus according to any one of claims 18 to 20, wherein the chip further comprises an error management unit, and the first control unit is specifically configured to:
control the error management unit to receive the hardware fault reported by the hardware unit; and
control the error management unit to send the hardware fault to the first processor and/or the off-chip processor.

22. The apparatus according to claim 21, wherein the error management unit stores configuration information, the configuration information indicates a receive end of the hardware fault, and the first control unit is specifically configured to:
control the error management unit to send the hardware fault to the first processor when the configuration information indicates that the receive end of the hardware fault is the first processor;
control the error management unit to send the hardware fault to the off-chip processor when the configuration information indicates that the receive end of the hardware fault is the off-chip processor; or
control the error management unit to send the hardware fault to the first processor and the off-chip processor when the configuration information indicates that the receive end of the hardware fault comprises the first processor and the off-chip processor.

23. The apparatus according to any one of claims 18 to 22, wherein the second control unit is further configured to:
control the second processor to detect the hardware fault of the hardware unit; and
control the second processor to report the hardware fault of the hardware unit to the first processor.

24. The apparatus according to claim 23, wherein the second control unit is specifically configured to:
control the second processor to report the hardware fault of the hardware unit to the error management unit; and
control the error management unit to send the hardware fault to the first processor.

25. The apparatus according to any one of claims 18 to 24, wherein the first processor is a functional security processor, and the second processor is an application processor.

26. A troubleshooting apparatus, used in a chip, wherein the chip comprises a hardware unit and an error management unit, the error management unit comprises a logic circuit and a plurality of registers, the plurality of registers are in one-to-one correspondence with a plurality of hardware faults, and the apparatus comprises a first control unit and a second control unit;
the first control unit is configured to control the logic circuit to receive a hardware fault reported by the hardware unit, and control the logic circuit to send the hardware fault to a first register, wherein the first register is a register that corresponds to the hardware fault and that is in the plurality of registers; and
the second control unit is configured to control the first register to send the hardware fault to the off-chip processor through a direct-connection hardware channel, wherein the direct-connection hardware channel is a hardware channel between the error management unit and the off-chip processor.

27. The apparatus according to claim 26, wherein the first control unit is further configured to:
control the logic circuit to determine, based on a number of the hardware fault, the register corresponding to the hardware fault.

28. The apparatus according to claim 26 or 27, wherein the first register stores configuration information, the configuration information indicates a receive end of the hardware fault, and the second control unit is specifically configured to:
control the first register to send the hardware fault to the off-chip processor through the direct-connection hardware channel when the configuration information indicates that the receive end of the hardware fault is the off-chip processor.

29. The apparatus according to any one of claims 26 to 28, wherein the chip further comprises a first processor, and the second control unit is further configured to:
control the first register to send the hardware fault to the first processor.

30. The apparatus according to claim 29, wherein the first register stores the configuration information, the configuration information indicates the receive end of the hardware fault, and the second control unit is specifically configured to:
control the first register to send the hardware fault to the first processor when the configuration information indicates that the receive end of the hardware fault is the first processor.

31. The apparatus according to any one of claims 26 to 30, wherein the chip further comprises a second processor, and the second control unit is further configured to:
control the second processor to receive the hardware fault reported by the hardware unit.

32. The apparatus according to any one of claims 26 to 28, wherein the chip further comprises a second processor, and the second control unit is further configured to:
control the first register to send the hardware fault to the first processor;
control the second processor to receive the hardware fault reported by the hardware unit; and
control the first processor to send the hardware fault to the off-chip processor.

33. The apparatus according to claim 32, wherein the second control unit is specifically configured to:
control the first processor to send the hardware fault to the off-chip processor when the first processor does not receive indication information sent by the second processor, wherein the indication information represents that the second processor has received the hardware fault.

34. The apparatus according to any one of claims 26 to 33, wherein the chip further comprises the second processor, and the second control unit is further configured to:
control the second processor to detect the hardware fault of the hardware unit; and
control the second processor to report the hardware fault of the hardware unit to the logic circuit.

35. A troubleshooting apparatus, comprising at least one processor and a memory, wherein the at least one processor executes a program or instructions stored in the memory, to enable the troubleshooting apparatus to implement the method according to any one of claims 1 to 17.

36. A computer-readable storage medium, configured to store a computer program, wherein when the computer program is run on a computer or a processor, the computer or the processor is enabled to implement the method according to any one of claims 1 to 17.

37. A computer program product, wherein the computer program product comprises instructions; and when the instructions are run on a computer or a processor, the computer or the processor is enabled to implement the method according to any one of claims 1 to 17.
